# EUROPEAN PATENT SPECIFICATION

(11) **EP 4 388 247 B1**
(45) Date of publication and mention of the grant of the patent: **13.08.2025**
(21) Application number: 22758598.1
(22) Date of filing: 22.08.2022
(51) Int. Cl.: F21V 5/04, F21V 7/05, H05K 1/00, G02B 6/00, G02B 7/00, F21S 4/28, F21Y 115/10

(54) **LED ARMATURE AND LIGHTING SYSTEM COMPRISING THE SAME**
LED-ANKER UND BELEUCHTUNGSSYSTEM DAMIT
ARMATURE DE DEL ET SYSTÈME D'ÉCLAIRAGE LE COMPRENANT

(30) Priority: 20.08.2021 NL 2029015
(43) Date of publication of application: 26.06.2024
(73) Proprietor: Air Supplies Holland B.V., 1093 GD Amsterdam (NL)
(72) Inventor: VAN DE OUDEWEETERING, Ronald, 1093 GD Amsterdam (NL)
(74) Representative: Arnold & Siedsma
(86) International application number: PCT/NL2022/050481
(87) International publication number: WO 2023/022598

(56) References cited:
- WO-A1-2012/124440
- US-A1- 2010 315 811
- US-A1- 2012 063 138
- US-A1- 2020 109 834
- US-A1- 2020 355 345
- US-B1- 9 587 803

## Description

The present application concerns a light emitting diode, LED, armature as well as a lighting system comprising a plurality of such LED armatures.

### BACKGROUND OF THE INVENTION

Armatures for LEDs known in the art comprise a plurality of first LEDs facing a first direction, and arranged in a line in a second direction, substantially perpendicular to the first direction. Such armatures further comprise a lens elongated in the second direction, of which a receiving side is configured to receive light from the plurality of first LEDs, and of which an emission side is configured to emit, as a bundle, light that was received on the receiving side, and that has passed through the lens.

As in many applications, when using LEDs as a light source for indoor farming, vertical farming and/or as growth lights, efficiency is of the utmost importance. These applications are notorious for both employing numerous LEDs at the same time, as well as employing LEDs for extensive durations. Even the smallest improvement in efficiency is considered significant as they help save power and therefore reduce costs.

To improve efficiency, it is known that arrange, for each first LED among the plurality of first LEDs, a reflector substantially facing the first direction, arranged adjacent to that first LED in a third direction, substantially perpendicular to the first and second directions.

In the above applications, it is a further goal of providing an area and/or set of objects such as plants, or alternatively seedlings and saplings, with light as uniformly as possible. When providing light to the mentioned flora, providing said light uniformly helps averaging out possible differences in growth rates and ideally leads to these plants being ready for the next step in the growth process at the same time.

It is therefore a goal of the present application to provide a LED armature with increased efficiency. It is a further goal of the application to provide a LED armature that can provide light more uniformly. US 9.587.803 discloses an armature according to the preamble of claim 1.

### SUMMARY OF THE INVENTION

According to the present invention, this is achieved by providing a LED armature as defined in claim 1 that is characterized in that the receiving side of the lens is adapted for reflecting a part of the light emitted by one first LED among the plurality of first LEDs onto the reflector adjacent to that LED, allowing that part of the light to be reflected by that reflector towards the receiving side.

Light emitted by the first LEDs travels towards the lens and there, part of the light is transmitted into the lens and, inevitably, part of the light is reflected. The ratio between transmission and reflection is in part determined by the angle at which light arrives at the lens, wherein the most light is transmitted and/or the least light is reflected when light arrives at the receiving surface of the lens at precisely a ninety degree angle.

Would a lens be provided with a receiving surface that receives light emitted by a LED at this ninety degree angle, reflections would be minimal. However, the inevitable reflections that are present will also travel back from the lens at a ninety degree angle - i.e. directly back towards the LED. The LED in question will absorb most of, if not effectively all of the reflected light. In an armature according to the present invention, the lens is provided with a receiving side adapted for reflecting towards a reflector. This light is therefore not absorbed by the LED but is in turn reflected back to the lens, thereby reducing losses occurring due to the earlier described effect and increasing efficiency of the armature as a whole.

The abovementioned improvement of efficiency is directly related to how much of the light reflected by the receiving side is reflected by the reflector back to the receiving side, so this is preferably 50% or more.

According to the invention, the receiving side, in a cross-sectional plane perpendicular to the second direction, is described by curves, wherein a first curve among the curves is shaped such that light, emitted by said one first LED that falls onto the part of the receiving side described by the first curve, is partially reflected towards the reflector adjacent to that one first LED.

The LED armatures having such a receiving side further comprises for each first LED among the plurality of first LEDs, a further reflector facing the first direction, arranged adjacent to that first LED, opposite to the reflector.

In some non claimed embodiments, the first curve is a parabola and the line in which the first LEDs are arranged, intersects perpendicularly with the parabola's axis of symmetry.

According to the invention, the receiving side, in the cross-sectional plane perpendicular to the second direction, is described by a plurality of curves. The second curve among the plurality of curves, adjoining the first curve, is shaped such that light emitted by said one first LED that falls onto the part of the receiving side described by the second curve, is partially reflected towards the further reflector adjacent to that one first LED. According to the invention, the first and second curves are circular arcs of which the centres are arranged at the reflector, and the further reflector respectively. According to the invention, each of the two circular arcs has an angle between 90 and 180 degrees, preferably between 95 and 135 degrees.

In some preferred embodiments, the lens has a substantially constant cross-section in the second direction.

To reduce the cost of manufacturing armatures, the line of first LEDs may be a LED strip.

To be able to quickly install and/or replace, the line of first LEDs may be arranged on a plate.

The LED armature may further comprise an armature frame having a cross-section approximately constant in the second direction. The armature frame may comprise a cross-section approximately constant in the second direction. Such an armature frame preferably comprises a pair of oppositely arranged guiding grooves in which edges of the plate are arranged.

In some embodiments, the LED armature further comprises one or more cooling elements configured to conduct heat generated by the first LEDs away from the respective LEDs, and/or the cooling elements can be arranged on a side of the armature frame opposite to the side on which the first LEDs are arranged. This allows for larger densities of LEDs to be used without damaging said LEDs and/or other (electronic) components in the armature.

In some embodiments, the first LEDs are wide spectrum LEDs, preferably white light LEDs.

In an embodiment, the armature may further comprise a plurality of second LEDs arranged in a line. In this embodiment, the lens comprises a beam shaping part, wherein the beam shaping part comprises the receiving side configured to receive light from the plurality of first LEDs, and the emission side configured to emit, as a bundle, light that was received on the receiving side, and that has passed through the beam shaping part. In this embodiment, the lens further comprising a diffusing part, the diffusing part being configured to receive light from the line of second LEDs, to internally guide said light, while allowing said light to diverge in the second direction, into the beam shaping part such that said light is emitted from the emissions side thereof.

The skilled person will appreciate that the abovementioned LED armature may include a lens comprising the beam shaping part and the diffusing part, without also comprising the receiving side shaped as discussed earlier. Specifically said, the invention at least partially solves the mentioned object by providing a LED armature comprising a plurality of second LEDs arranged in a line. The lens further comprises a beam shaping part and a diffusing part. The beam shaping part comprises the receiving side configured to receive light from the plurality of first LEDs, and the emission side configured to emit, as a bundle, light that was received on the receiving side, and that has passed through the beam shaping part. The diffusing part is configured to receive light from the line of second LEDs, to internally guide said light while allowing said light to diverge in the second direction and/or in a direction opposite to the second direction, into the beam shaping part such that said light is emitted from the emissions side thereof.

Allowing light emitted by the second LEDs to diverge in the second direction ensures that, once emitted from the emission side of the beam shaping part, said light will be emitted more evenly spread - e.g. more uniformly - in the second direction, than if said light would have travelled through just the beam shaping part of the elongated lens.

The following embodiments specify features which are optional for both of the two abovementioned armatures in which the lens comprises a beam shaping part and a diffusing part.

In some preferred embodiments, the diffusing part is further configured to prevent and/or limit divergence of light received from the line of second LEDs in directions perpendicular to the second direction. Light of the second LEDs is then not spread out in, for example, the third direction when exiting the beam shaping part. This preferred embodiment illuminates a well defined, elongated area particularly uniformly.

In some preferred embodiments, wherein the diffusion part is configured to internally guide light received from the line of second LEDs over a distance inversely related to, preferably approximately inversely proportional to a distance between adjacent second LEDs in the line that they are arranged in. Would the diffusing part internally guide light over a distance relatively small in relation to the distance between adjacent second LEDs, beams of light emitted by the individual LEDs may not have diverged in the second direction sufficiently and, once these beams of light exit the beam shaping part of the lens, the beams perhaps still do not overlap. In this case, dark spots may exist between the areas of the beam shaping part of the lens where the individual beams exit.

In some preferred embodiments, the beam shaping part and the diffusing part are formed as a single, monolithic body and/or are formed from a single extrusion profile. Such manufacturing processes are robust and allow for cheap manufacturing of the lens.

In some preferred embodiments, the line of first LEDs comprises a first number of first LEDs per unit of distance, and/or wherein the line of second LEDs has a second number of LEDs per unit of distance, preferably smaller than the first number. For this embodiment the diffusing part is particularly useful as it may allow for the line of second LEDs to, specifically considering the distribution of light in the second direction, emit light with a uniformity closer to the light emitted by the more numerous first LEDs and/or more densely arranged line of first LEDs.

In some embodiments, the line of second LEDs is arranged parallel to the line of first LEDs. When the shortest distance between the line of first LEDs and the line of second LEDs is always the same, a simpler lens design can be used.

To further simplify installing the LEDs, the line of first LEDs and the line of second LEDs may be arranged on one plate. In some embodiments, the second LEDs also face the first direction and/or the line of second LEDs is a LED strip.

In some embodiments, the second LEDs are configured to emit light in a range of wavelengths different from the first LEDs. Plants may require light from varying wavelengths with varying intensities. However, emitting light uniformly is still important and optimal placement of the armature may be the same for these varying wavelengths. By first allowing the light of the second LEDs to diffuse, light from one second LED is spread out. By directing it into the beam shaping part, it is emitted in approximately the same direction as light from the first LEDs. In some embodiments, the second LEDs are at least one of narrow spectrum LEDs, LEDs of which the colour can be selected, and/or LEDs configured to emit green light and/or to emit light with a wavelength in the range of 500 to 580 nanometre, and preferably around 550 nanometre.

According to a further aspect of the invention, a lighting system is provided comprising one or more pairs of substantially parallel frame sections, and, in between each pair of frame sections, one or more LED armatures according to any of the preceding claims. For each pair of frame sections, the one or more LED armatures are arranged substantially parallel to each other and/or substantially perpendicularly to each frame section from said pair of frame sections.

In a preferred embodiment, the system comprises two or more pairs of substantially parallel frame sections, wherein a first pair of frame sections is hingedly attached to a second pair of frame sections, allowing the first pair of frame sections and the second pairs of frame sections to pivot in relation to each other along an axis substantially perpendicular to each of the frame sections from the first and second pairs of frame sections and/or substantially parallel to each of the LED armatures in between the first and/or the second pair of frame sections.

This hinged connection is provided in a preferred embodiment by the first pair of frame sections comprising a first and a second frame section; and the second pair of frame sections comprising a third and a fourth frame section. A first end of the first frame section and a first end of the third frame section are hingedly connected. A first end of the second frame section, being an end of the second frame section on the same side of the first pair of frame sections as the first end of the first frame section, and a first end of the fourth frame section, being an end of the fourth frame section on the same side of the second pair of frame sections as the first end of the third frame sections, are also hingedly connected.

### DESCRIPTION OF THE FIGURES

Further preferred embodiments of the present invention and particular advantages thereof will be further discussed in relation to the accompanying figures, wherein:
FIG. 1 shows a system comprising a plurality of LED armatures according to the invention;
FIG 2 shows a schematic cross-section of an embodiment of a LED armature according to the invention;
FIG 3 shows a schematic cross-section, perpendicular to the cross-section shown in FIG. 2, of an embodiment of a LED armature according to the invention;
FIG. 4 shows a schematic cross-section in a plane similar or equal to that of FIG. 2, of an embodiment of a LED armature according to the invention; and
FIG. 5-6 show light patterns affected by lenses which may be included in LED armatures according to the invention;

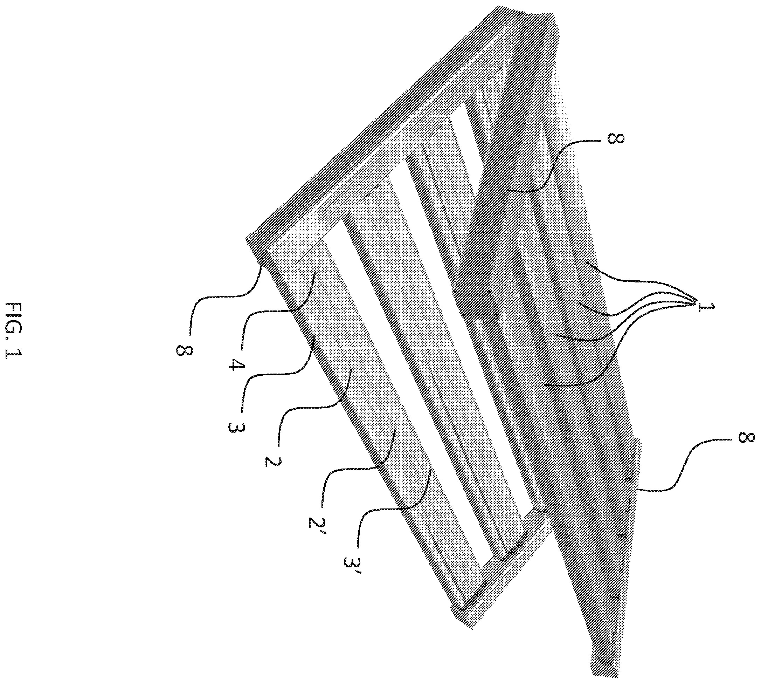

Referring to figure 1, a system comprising a total of eight LED armatures 1 is shown. This embodiment in particular further comprises two pairs of perpendicular frame parts 8. The perpendicular frame parts forming a pair together flank four LED armatures 1. Each frame part is hingedly attached, on one end, with another frame part that it does not form a pair with.

The skilled person will appreciate that any number of LED armatures 1 may be included in such a system, and that LED armatures 1 may also be mutually coupled by a frame part on just one side of the armatures 1 or by pairs of frame parts 8 not perpendicular to each other. Additionally, embodiments are conceivable in which frame parts 8 are not necessary at all, for example when the system comprises a single LED armature 1.

As shown, LED armature 1 comprises a plurality of first LEDs 2, 2' as well as a plurality of second LEDs 3,3'. Armature 1 further comprises a lens 4 arranged in front of each of these pluralities of LEDs. First LEDs 2,2' are in this case arranged in a first line of first LEDs 2 and a second line of first LEDs 2', but any number of lines is possible. Second LEDs 3, 3' are in this case arranged in a first line of second LEDs 3 and a second line of second LEDs 3', but any number of lines is possible.

While the system shown generally consists of two parts hingedly attached to one another in the way explained before, the system may consist of just one part, or three or more parts hingedly attached to other parts in a chain.

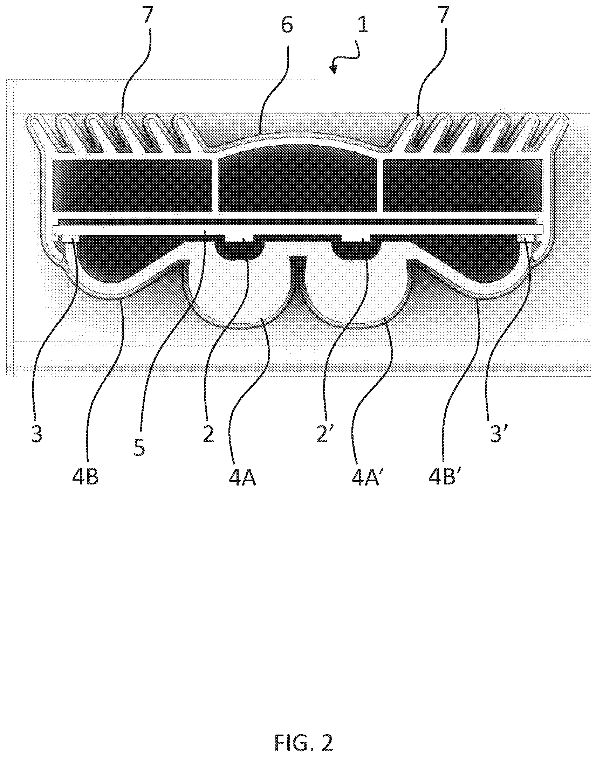

Referring to figure 2, a cross-section of an embodiment of LED armature 1 according to the invention is shown. Specifically, the cross-section shown is in a plane perpendicular to the lines of first LEDs 2, 2' and the lines of second LEDs 3, 3' also shown in figure 1. In principle, figure 2 shows a cross-section of only one part of LED armature 1. However this cross-sections is in fact representative for most of LED armature 1 because such armatures tend to have an essentially constant cross-section in the second direction and/or along their entire length, or they at least have a shape wherein variations in the cross-section over the length of the armature may be minimal and, if any, have only an insubstantial effect on the properties of the armature.

Additionally, figure 2 shows a plate 5 on which the LEDs 2, 2', 3, 3' are mounted and an armature frame 6 in which plate 5 is arranged. Armature frame 6 is provided with cooling fins 7 that help dissipate heat generated by the LEDs 2, 2', 3, 3', as well as by any other (electronic) components included in LED armature 1.

The plurality of first LEDs 2, 2' is arranged to emit light towards lens 4. The direction in which first LEDs 2, 2' from the first and second lines of first LEDs 2, 2' emit light is also referred to as the first direction. It is not essential that each first LED 2, 2' emits light in exactly the first direction or in exactly the same direction as all of the other first LEDs 2, 2'. Minor variations may occur.

While figure 2 effectively shows only two schematic indications of first LEDs 2, 2' and two schematic indications of second LEDs 3, 3', each of these schematic indications represents a line of LEDs extending in a direction substantially perpendicular to the cross-section shown. The direction in which the lines of first LEDs 2, 2' extend is also referred to as the second direction.

The skilled person will appreciate that each line of first LEDs 2, 2' defines its respective 'first direction,' and 'second direction.' Further directions defined in relation to a particular line of first LEDs 2, 2' can therefore be defined in terms of, or in relation to the first direction and second direction without these further directions being limited in their relation to other lines of first LEDs 2, 2' present in LED armature 1 or in a system comprising a plurality of LED armatures 1.

In the embodiment shown, both lines of second LEDs 3, 3' are arranged on plate 5 at a distance from the lines of first LEDs 2, 2'. The lines of second LEDs 3, 3' may be parallel to each other and/or each line may be parallel to one or both of the lines of first LEDs 2, 2' but other mutual arrangements are also possible. In the embodiment shown, the second LEDs 3, 3' are arranged to emit light in the first direction but this is not essential.

Lens 4 as shown in figure 1 is specified in figure 2 as comprising two main lens bodies referred to as the beam shaping parts 4A, 4A' of lens 4. Additionally, lens 4 is shown as comprising two side lens bodies referred to as the diffusing parts 4B, 4B'. Embodiments in which lens 4 comprises one beam shaping part 4A, and/or one diffusing part 4B are also conceivable.

In the embodiment shown, beam shaping part 4A is arranged in front of the line of first LEDs 2. Beam shaping part 4A receives light that is emitted by the first LEDs in the first direction. This light travels through beam shaping part 4A, and is emitted from an emission side of beam shaping part 4A in a bundle of light.

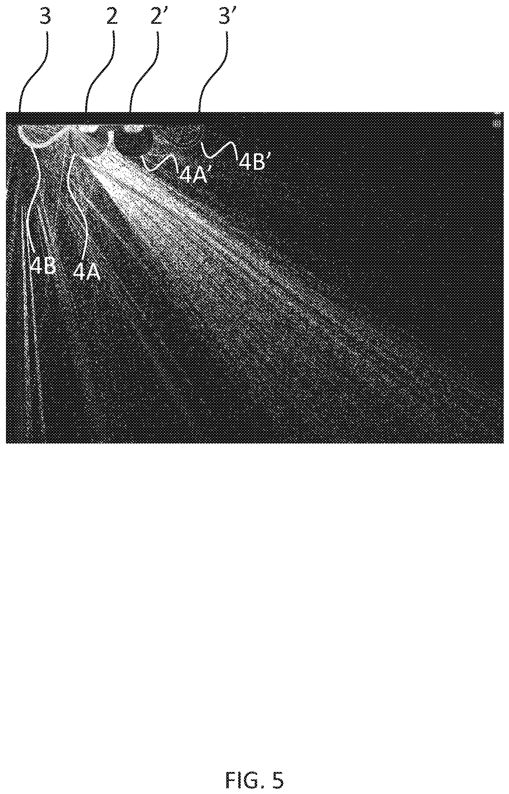

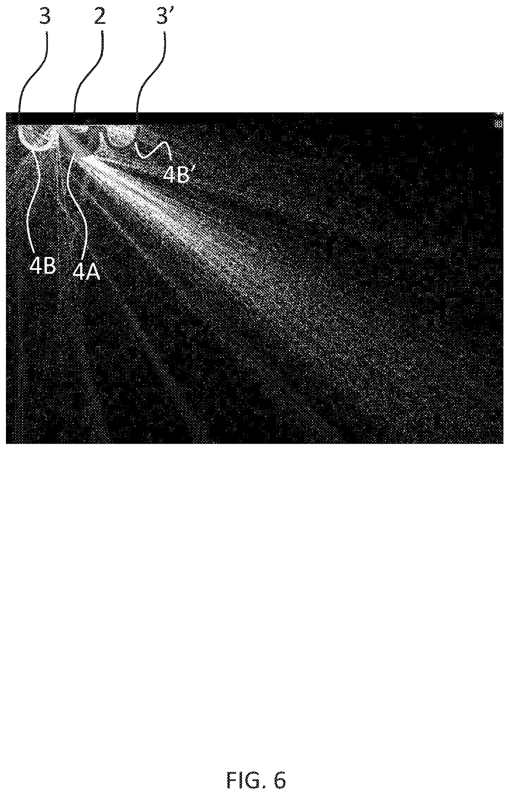

Diffusing part 4B is arranged in front of line of second LEDs 3. The effect that lens 4, and in particular diffusing part 4B, has on light emitted by second LEDs 3 is shown in figures 5 and 6. In figure 5, lens 4 comprises beam forming parts 4A, 4A' and diffusing parts 4B, 4B'. In figure 6, lens 4 comprises just beam forming part 4A. Both figures 5 and 6 show a pattern that light emitted by second LEDs 3 makes when being internally guided by diffusing part 4B towards beam shaping part 4A. In this embodiment, light enters diffusing part 4B because a receiving surface thereof is arranged directly in front, and facing second LEDs 3. Light emitted by second LEDs 3 arrives at said receiving surface at an angle of approximately 90 degrees, or at an angle of 60 degrees or more, or at least at an angle of 45 degrees or more. In this embodiment, light is internally guided by diffusing part 4B into the beam shaping part 4A because of the light curve along which diffusing part 4B extends from the receiving surface towards the beam shaping part 4A.

As can be seen from figures 5 and 6, light is internally guided by the diffusing part 4B and does not, or at least barely, diverge in directions perpendicular to the second direction.

As the mutual arrangement between first LEDs 2 and second LEDs 3 may vary so may the shape and size of diffusing part 4B. Any particular shapes and sizes shown in the figures and discussed in the description are merely examples.

The skilled person will appreciate that in this application a bundle of light can refer to a beam of light having no particular shape and/or size, but which does travels in a general direction while diverging less than when it was just emitting from its source and/or before it travelled through any beam shaping part, for example either of the beam shaping parts 4A, 4A'.

There is a number of advantages to mounting all of the LEDs in question on a single plate 5 as shown in figure 2. It is for example easier to install, and equivalently, easier to remove all of the LEDs at the same time if significant repairs or complete replacement is required. Additionally, the number of connectors required may be less. However, the skilled person will appreciate that plate 5 may also be embodiment by a plurality of plates. Each line may be mounted on a respective plate, in which case the plates may be elongated and arranged parallel to each other, mutually aligned in a direction perpendicular to the direction of the line of first or second LEDs. Or, two or more plates can each have a part of one or more lines mounted thereon. In that case, these plates are arranged in a line and/or mutually aligned in the direction of the one or more lines mounted on these plates. Finally, it is also possible to mount every LED on its respective plate 5.

In the embodiment shown in figure 2, cooling fins 7 are shown in a side of armature frame 6 opposite to the side on which the LEDs are arranged. While this is preferable, embodiments are conceivable in which cooling fins, or any other implementation of a heat sink, are mounted to either of the sides of armature frame 6 shown, or on outer ends of armature frame 6 not shown. Ultimately, cooling fins 7 (or any heat sink, for that matter) may not be necessarily required.

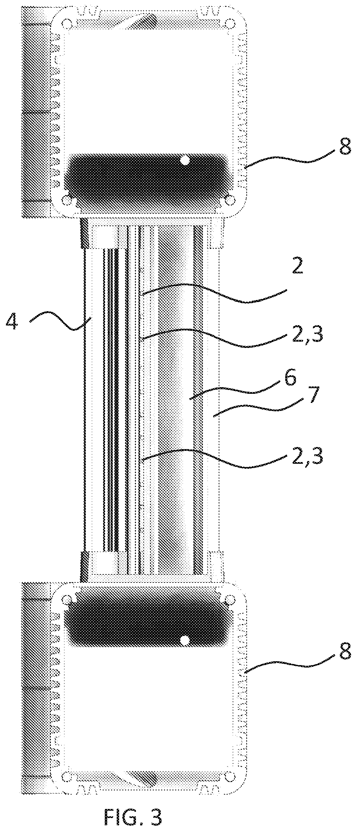

Referring to figure 3, a cross-section of a system comprising an embodiment of a LED armature 1 according to the invention is shown. Similarly to the embodiment shown in figure 2, LED armature 1 comprises a line of first LEDs 2, a line of second LEDs 3, and lens 4. LED armature 1 further comprises armature frame 6 provided with cooling fins 7. Similarly to the system shown in figure 1, LED armature 1 is flanked by frame parts 8.

Specifically, the cross-section shown is one in a plane spanned by vectors in the first and second direction. From this cross-section, it can be seen that first LEDs 2 are arranged in a line and that second LEDs 3 are also arranged in a line. In this embodiment, the line of first LEDs comprises a total twelve first LEDs and the line of second LEDs comprises a total of two LEDs. However, any other number of LEDs may be used to form the line of first LEDs 2 and the line of second LEDs 3.

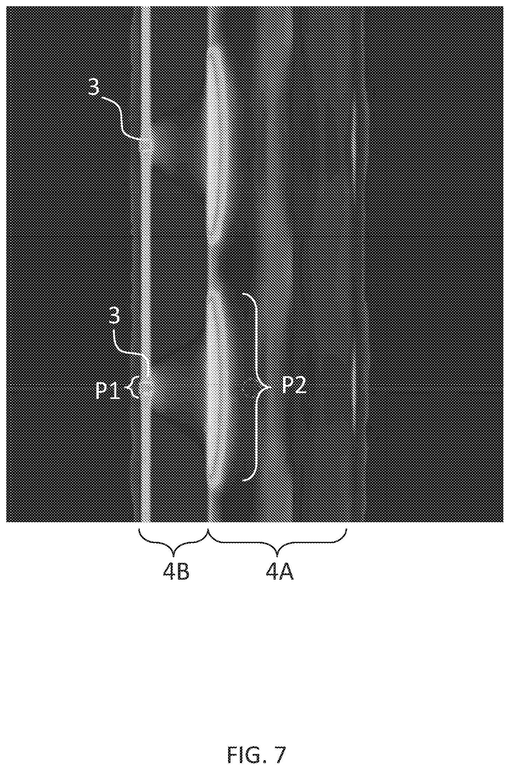

Figure 7 shows a view of LED armature 1, specifically of second LEDs 3 and lens 4 from a direction opposite to the first direction. That is, the first direction points out of the page. Second LEDs 3 emit light in a direction pointing out of the page. It follows from the direction in which lens 4 is elongated that, in this embodiment and seen from this perspective, the second direction corresponds to the vertical direction. As shown in figure 7, light emitted by a second LED 3 arrives at one end of the diffusing part 4B with a first profile P1. In this embodiment, the dimension of this profile that is particularly relevant is the length in the second direction. Due to the elongated shape of the lens, specifically the elongated shape of diffusing part 4B, while received light is internally guided through said diffusing part 4B it diverges in the second direction. Therefore, light arrives at the other end of the diffusing part 4B with a second profile P2 that is elongated in the second direction with respect to first profile P1. As was explained in relation to figures 5 and 6, diffusing part 4B prevents and/or limits divergence of light received from the line of second LEDs 3 in directions perpendicular to the second direction.

Referring back to figure 7, in the embodiment shown the line of first LEDs 2 comprises a larger number of LEDs than the equally long line of second LEDs 3. Light emitted by the line of first LEDs 2 arrives at the receiving side of beam shaping part 4A according to a particular distribution. Preferably, first LEDs 2 illuminate a contiguous area of this receiving side. However, it is also possible that first LEDs are not arranged near enough to each other and/or to close to the receiving side. In this case, first LEDs 2 illuminate non-overlapping areas of the receiving side and/or there are dark spots between the areas of the receiving side illuminated by first LEDs 2 which are adjacent in the line. When the line of first LEDs is arranged at a given distance from lens 4, the skilled person can determine the number of first LEDs required for the beam of light provided by LED armature 1 as a whole to be substantially uniform in the second direction. As light from second LEDs 3 is first received by and internally guided through diffusing part 4B, the number of second LEDs required for the beam of light provided by armature 1 as a whole to be equally uniform will be lower. Alternatively, in an embodiment of LED armature 1 comprising a line of second LEDs 3 which is the same as, or at least substantially the same as its line of first LEDs 2, turning on the line of second LEDs will allow for armature 1 to provide a beam of light more uniform in the second direction then when the line of first LEDs is turned on.

Lens 4 may be made of a particularly transparent material such as polymethylmethacrylate, 'PMMA.' Other materials may also be used. Lens 4 may be made by extruding a base material such as PMMA into an elongated body having a cross-section as discussed in relation to figure 2, or any of the mentioned alternatives. Armature frame 6, as well as frame parts 8 may be made of aluminium, or one or more of any of the suitable materials.

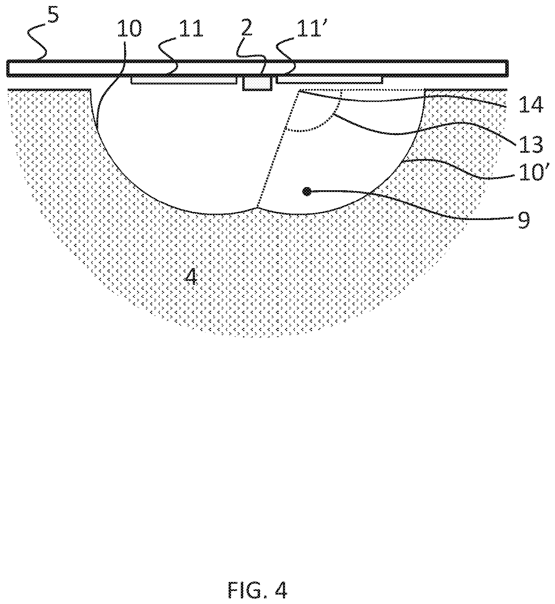

Referring to figure 4, LED armature 1 again comprises a plate 5 on which is arranged a line of first LEDs 2. In front thereof is arranged lens 4. The cross-section shown in figure 4 corresponds to the cross-section (or, is a cross-section in a plane parallel to the cross section) shown in figure 2.

While it is common in the art to say that LEDs emit light in a particular direction, the skilled person is aware that this is not just one direction but that LEDs emit in a steradian. To arrange a LED directly in front of a flat surface results in part of the light emitted by this LED to arrive at the surface at an angle causing a part of this light to be reflected. As the efficiency of LED armature 1 as a whole is directly related to how much of the light emitted by first LEDs 2 is transmitted into lens 4, specifically beam shaping part 4A, there is an incentive to provide a receiving surface that receives light from the first LEDs at an angle as small as possible.

However, because an actual LED is not a point source, at least some light will always arrive at the receiving surface at an angle. Receiving surfaces designed according to just the abovementioned requirement reflect light back onto first LED 2. Because first LED 2 is not reflective itself, light reflected back onto first LED 2 is absorbed by LED 2 and is consequently lost.

LED armature 1 shown in figure 4, and specifically lens 4 is provided with a groove 9 of which the inside surface acts as a receiving side 10, 10'. Adjacent to LED 2 is/are one or more reflectors 11, 11'. In this embodiment in particular, two reflectors 11, 11' flank first LED 2 in a third direction, perpendicular to the first and second directions. It is also possible to use just one reflector on one side of LED 2, or to use a plurality of reflectors arranged on either side of LED 2. Each reflector 11, 11' is arranged at a distance from first LED 2 and faces the first direction. The reflector may also face other directions. The shape of groove 9 is adapted for reflecting light emitted by first LED 2 towards either of these reflectors 11, 11'. Consequently, a part of the light emitted by first LED 2 that is reflected by receiving sides 10, 10' of lens 4 is not reflected directly back at said first LED 2 but to the reflectors 11, 11'. The reflectors, in turn, reflect said light back towards lens 4. This increases the overall efficiency of LED armature 1. Efficiency in this case may be defined as how much light is transmitted in relation to the power consumed by armature 1, or by the system as a whole.

Embodiments of receiving side 10, 10'having various shapes and sizes that achieve this effect can be conceived and the embodiment shown in figure 4 is merely exemplary. In said embodiment, the receiving side is 'broken up' in two sections. Both a first section 10 and a second section 10' have a shape that in the plane shown in figure 4 correspond to a circle arc. Specifically, shown are circle arcs of a particular angle 13 somewhat larger than 90 degrees. For each circle arc, its centre 14 is arranged adjacent to LED 2 (not claimed) or at one of the reflectors, respectively. However, other geometric shapes are also possible.

The skilled person will appreciate that LED armature 1 may include a lens 4 comprising the beam shaping part and the diffusing part as described in relation to figures 2-3, and 5-7, and without the receiving side as discussed in relation to figure 4. That is, in a particular embodiment the armature comprises a plurality of first LEDs facing a first direction, and arranged in a line in a second direction, substantially perpendicular to the first direction, for each first LED among the plurality of first LEDs, a reflector substantially facing the first direction, arranged adjacent to that first LED in a third direction, substantially perpendicular to the first and second directions, and a lens elongated in the second direction, of which a receiving side is configured to receive light from the plurality of first LEDs, and of which an emission side is configured to emit, as a bundle, light that was received on the receiving side, and that has passed through the lens. In this particular embodiment, the armature further comprises a plurality of second LEDs arranged in a line. The lens further comprises a beam shaping part and a diffusing part. The beam shaping part comprises the receiving side configured to receive light from the plurality of first LEDs, and the emission side configured to emit, as a bundle, light that was received on the receiving side, and that has passed through the beam shaping part. The diffusing part is configured to receive light from the line of second LEDs, to internally guide said light while allowing said light to diverge in the second direction and/or in a direction opposite to the second direction, into the beam shaping part such that said light is emitted from the emissions side thereof.

In the above, the present invention has been described using detailed embodiments thereof. However, the present invention is not limited to these embodiments. Various modifications to the embodiments are possible without deviating from the scope of the present invention, which is defined by the appended claims.

## Claims

1. A light emitting diode, LED, armature (1) comprising:
a plurality of first LEDs facing a first direction, and arranged in a line in a second direction, substantially perpendicular to the first direction;
for each first LED (2, 2') among the plurality of first LEDs, a reflector (11) substantially facing the first direction, arranged adjacent to that first LED (2, 2') in a third direction, substantially perpendicular to the first and second directions, and a further reflector (11') substantially facing the first direction and arranged adjacent to said first LED (2, 2') in a direction opposite to the third direction;
a lens (4) elongated in the second direction, of which a receiving side (10, 10') is configured to receive light from the plurality of first LEDs, and of which an emission side is configured to emit, as a bundle, light that was received on the receiving side (10, 10'), and that has passed through the lens (4);
wherein the receiving side (10, 10') of the lens (4) is adapted for reflecting a part of the light emitted by one first LED (2, 2') among the plurality of first LEDs onto the reflector (11) adjacent to that LED, allowing that part of the light to be reflected by that reflector (11) towards the receiving side (10, 10');
wherein the receiving side (10, 10'), in the cross-sectional plane perpendicular to the second direction, is described by a plurality of curves;
wherein a first curve among the plurality of curves is shaped such that light, emitted by said one first LED (2, 2') that falls onto the part of the receiving side described by the first curve (10), is partially reflected towards the reflector (11) adjacent to that one first LED (2, 2');
wherein a second curve among the plurality of curves, adjoining the first curve, is shaped such that light emitted by said one first LED (2, 2') that falls onto the part of the receiving side described by the second curve (10'), is partially reflected towards the further reflector (11') adjacent to that one first LED (2, 2');
**characterized in that**
the first and second curves are circular arcs of which the centres are arranged at the reflector (11), and the further reflector (11') respectively;
wherein each of the two circular arcs has an angle between 90 and 180 degrees, preferably between 95 and 135 degrees.

2. The LED armature (1) according to claim 1, wherein at least 50% of the light reflected by the receiving side (10, 10'), is reflected by the reflector (11) back to the receiving side (10, 10').

3. The LED armature (1) according to any of the preceding claims, wherein the cross-section of the lens (4) is substantially constant in the second direction.

4. The LED armature (1) according to any of the preceding claims, wherein the line of first LEDs is a LED strip; and/or wherein the first LEDs are wide spectrum LEDs, preferably white light LEDs.

5. The LED armature (1) according to any of the preceding claims, wherein the line of first LEDs is arranged on a plate (5).

6. The LED armature (1) according to any of the preceding claims, further comprising an armature frame having a cross-section approximately constant in the second direction, the LED armature (1) preferably further comprising one or more cooling elements configured to conduct heat generated by the first LEDs away from the respective LEDs, and/or wherein the cooling elements are arranged on a side of the armature frame opposite to the side on which the LEDs are arranged.

7. The LED armature (1) of claims 5 and 6, wherein the armature frame comprises a pair of oppositely arranged guiding grooves in which edges of the plate are arranged.

8. The LED armature (1) according to any of the preceding claims, further comprising:
a plurality of second LEDs arranged in a line; and,
wherein the lens (4) comprises a beam shaping part, wherein the beam shaping part comprises the receiving side (10, 10') configured to receive light from the plurality of first LEDs, and the emission side configured to emit, as a bundle, light that was received on the receiving side (10, 10'), and that has passed through the beam shaping part;
wherein the lens (4) further comprising a diffusing part, wherein the diffusing part is configured to receive light from the line of second LEDs (3, 3'), to internally guide said light while allowing said light to diverge in the second direction and/or in a direction opposite to the second direction, into the beam shaping part such that said light is emitted from the emissions side thereof; wherein the diffusing part is preferably further configured to:
- prevent and/or limit divergence of light received from the line of second LEDs (3, 3') in directions perpendicular to the second direction; and/or
- internally guide light received from the line of second LEDs (3, 3') over a distance related to, preferably approximately proportional to, a distance between adjacent second LEDs (3, 3').

9. The LED armature (1) according to claim 8 wherein the beam shaping part and the diffusing part are formed as a single, monolithic body and/or are formed from a single extrusion profile.

10. The LED armature (1) according to any of the claims 8 or 9, wherein the line of first LEDs (2, 2') comprises a first number of first LEDs (2, 2') per unit of distance, and/or wherein the line of second LEDs (3, 3') has a second number of LEDs (3, 3') per unit of distance, preferably smaller than the first number.

11. The LED armature (1) according to any of the claims 8, 9 or 10, wherein the line of second LEDs (3, 3') is a LED strip and/or arranged parallel to the line of first LEDs (2, 2').

12. The LED armature (1) according to any of the claims 8-11, wherein the line of first LEDs and the line of second LEDs (3, 3') are arranged on one plate.

13. The LED armature (1) according to any of the claims 8-12, wherein the second LEDs (3, 3'):
- are configured to emit light in a range of wavelengths different from the first LEDs,
- also face the first direction, and/or;
at least one of narrow spectrum LEDs, LEDs of which the colour can be selected, and/or LEDs configured to emit green light and/or to emit light with a wavelength in the range of 500 to 580 nanometre, and preferably around 550 nanometre.

14. A lighting system comprising
one or more pairs of substantially parallel frame sections (8); and
in between each pair of frame sections (8), one or more LED armatures (1) according to any of the preceding claims;
wherein, for each pair of frame sections (8), the one or more LED armatures are arranged substantially parallel to each other and/or substantially perpendicularly to each frame section (8) from said pair of frame sections (8).

15. The lighting system according to claim 14, comprising two or more pairs of substantially parallel frame sections (8);
wherein a first pair of frame sections (8) is hingedly attached to a second pair of frame sections (8), allowing the first pair of frame sections (8) and the second pairs of frame sections (8) to pivot in relation to each other along an axis substantially perpendicular to each of the frame sections (8) from the first and second pairs of frame sections (8) and/or substantially parallel to each of the LED armatures in between the first and/or the second pair of frame sections (8); wherein, preferably:
the first pair of frame sections (8) comprises a first and a second frame section (8); and
the second pair of frame sections (8) comprises a third and a fourth frame section (8);
wherein a first end of the first frame section (8) and a first end of the third frame section (8) are hingedly connected;
wherein a first end of the second frame section (8), being an end of the second frame section (8) on the same side of the first pair of frame sections as the first end of the first frame section (8), and a first end of the fourth frame section (8), being an end of the fourth frame section (8) on the same side of the second pair of frame sections (8) as the first end of the third frame sections (8), are also hingedly connected.

## Patentansprüche

1. Leuchtdioden-Armatur, LED-Armatur (1), umfassend:
eine Vielzahl von ersten LEDs, die in eine erste Richtung weisen und in einer zweiten Richtung in einer Reihe angeordnet sind, die im Wesentlichen senkrecht zu der ersten Richtung steht;
für jede erste LED (2, 2') unter der Vielzahl von ersten LEDs, einen Reflektor (11), der im Wesentlichen in die erste Richtung weist und neben dieser ersten LED (2, 2') in einer dritten Richtung angeordnet ist, die im Wesentlichen senkrecht zu der ersten und zweiten Richtung steht, und einen weiteren Reflektor (11'), der im Wesentlichen in die erste Richtung weist und neben der ersten LED (2, 2') in einer Richtung angeordnet ist, die der dritten Richtung entgegengesetzt ist;
eine Linse (4), die in der zweiten Richtung verlängert ist, deren Empfangsseite (10, 10') konfiguriert ist, um Licht von der Vielzahl der ersten LEDs zu empfangen, und deren Emissionsseite konfiguriert ist, um Licht, das auf der Empfangsseite (10, 10') empfangen wurde und das durch die Linse (4) passiert ist, gebündelt zu emittieren;
wobei die Empfangsseite (10, 10') der Linse (4) angepasst ist, um einen Teil des Lichts, das durch eine erste LED (2, 2') unter der Vielzahl von ersten LEDs emittiert wird, auf den Reflektor (11) neben dieser LED zu reflektieren, um zu ermöglichen, dass dieser Teil des Lichts durch diesen Reflektor (11) zu der Empfangsseite (10, 10') hin reflektiert wird;
wobei die Empfangsseite (10, 10') in der Querschnittsebene senkrecht zu der zweiten Richtung durch eine Vielzahl von Kurven beschrieben wird;
wobei eine erste Kurve unter der Vielzahl von Kurven derart geformt ist, dass Licht, das durch die eine erste LED (2, 2') emittiert wird, das auf den Teil der Empfangsseite fällt, der durch die erste Kurve (10) beschrieben wird, teilweise zu dem Reflektor (11) hin reflektiert wird, der neben dieser einen ersten LED (2, 2') liegt;
wobei eine zweite Kurve unter der Vielzahl von Kurven, die an die erste Kurve angrenzt, derart geformt ist, dass Licht, das durch die eine erste LED (2, 2') emittiert wird, das auf den Teil der Empfangsseite fällt, der durch die zweite Kurve (10') beschrieben wird, teilweise zu dem weiteren Reflektor (11') hin reflektiert wird, der neben dieser einen ersten LED (2, 2') liegt;
**dadurch gekennzeichnet, dass** die erste und die zweite Kurve Kreisbögen sind, deren Mittelpunkte jeweils an dem Reflektor (11) und an dem weiteren Reflektor (11') angeordnet sind;
wobei jeder der zwei Kreisbögen einen Winkel zwischen 90 und 180 Grad, vorzugsweise zwischen 95 und 135 Grad, aufweist.

2. LED-Armatur (1) nach Anspruch 1, wobei mindestens 50 % des Lichts, das durch die Empfangsseite (10, 10') reflektiert wird, durch den Reflektor (11) zurück zu der Empfangsseite (10, 10') reflektiert wird.

3. LED-Armatur (1) nach einem der vorstehenden Ansprüche, wobei der Querschnitt der Linse (4) in der zweiten Richtung im Wesentlichen konstant ist.

4. LED-Armatur (1) nach einem der vorstehenden Ansprüche, wobei die Reihe von ersten LEDs ein LED-Streifen ist; und/oder wobei die ersten LEDs Breitband-LEDs, vorzugsweise Weißlicht-LEDs, sind.

5. LED-Armatur (1) nach einem der vorstehenden Ansprüche, wobei die Reihe von ersten LEDs auf einer Platte (5) angeordnet ist.

6. LED-Armatur (1) nach einem der vorstehenden Ansprüche, ferner umfassend einen Armaturenrahmen, der einen Querschnitt aufweist, der in der zweiten Richtung annähernd konstant ist, die LED-Armatur (1) vorzugsweise ferner umfassend ein oder mehrere Kühlelemente, die konfiguriert sind, um Wärme, die durch die ersten LEDs erzeugt wird, von den jeweiligen LEDs wegzuleiten, und/oder wobei die Kühlelemente auf einer Seite des Armaturenrahmens angeordnet sind, die der Seite entgegengesetzt ist, auf der die LEDs angeordnet sind.

7. LED-Armatur (1) nach den Ansprüchen 5 und 6, wobei der Armaturenrahmen ein Paar von entgegengesetzt angeordneten Führungsnuten umfasst, in denen Kanten der Platte angeordnet sind.

8. LED-Armatur (1) nach einem der vorstehenden Ansprüche, ferner umfassend:
eine Vielzahl von zweiten LEDs, die in einer Reihe angeordnet sind; und
wobei die Linse (4) einen Strahlformungsteil umfasst, wobei der Strahlformungsteil die Empfangsseite (10, 10'), die konfiguriert ist, um Licht von der Vielzahl von ersten LEDs zu empfangen, und die Emissionsseite umfasst, die konfiguriert ist, um Licht, das auf der Empfangsseite (10, 10') empfangen wurde und das durch den Strahlformungsteil passiert ist, gebündelt zu emittieren;
wobei die Linse (4) ferner einen Streuteil umfasst, wobei der Streuteil konfiguriert ist, um Licht von der Reihe von zweiten LEDs (3, 3') zu empfangen, das Licht intern zu leiten und gleichzeitig zu ermöglichen, dass das Licht in die zweite Richtung und/oder in eine der zweiten Richtung entgegengesetzten Richtung, in den Strahlformungsteil derart divergiert, dass das Licht von der Emissionsseite davon emittiert wird; wobei der Streuteil vorzugsweise ferner konfiguriert ist zum:
- Verhindern und/oder Begrenzen der Divergenz von Licht, das von der Reihe von zweiten LEDs (3, 3') empfangen wird, in Richtungen senkrecht zu der zweiten Richtung; und/oder
- internen Leiten von Licht, das von der Reihe von zweiten LEDs (3, 3') empfangen wird, über eine Distanz, die mit einer Distanz zwischen nebeneinanderliegenden zweiten LEDs (3, 3') in Beziehung steht, vorzugsweise ungefähr proportional dazu ist.

9. LED-Armatur (1) nach Anspruch 8, wobei der Strahlformungsteil und der Streuteil als ein einziger, monolithischer Körper ausgebildet sind und/oder aus einem einzigen Extrusionsprofil ausgebildet sind.

10. LED-Armatur (1) nach einem der Ansprüche 8 oder 9, wobei die Reihe von ersten LEDs (2, 2') eine erste Anzahl erster LEDs (2, 2') pro Distanzeinheit umfasst und/oder wobei die Reihe von zweiten LEDs (3, 3') eine zweite Anzahl von LEDs (3, 3') pro Distanzeinheit aufweist, die vorzugsweise kleiner als die erste Anzahl ist.

11. LED-Armatur (1) nach einem der Ansprüche 8, 9 oder 10, wobei die Reihe von zweiten LEDs (3, 3') ein LED-Streifen ist und/oder parallel zu der Reihe von ersten LEDs (2, 2') angeordnet ist.

12. LED-Armatur (1) nach einem der Ansprüche 8 bis 11, wobei die Reihe von ersten LEDs und die Reihe von zweiten LEDs (3, 3') auf einer Platte angeordnet sind.

13. LED-Armatur (1) nach einem der Ansprüche 8 bis 12, wobei die zweiten LEDs (3, 3'):
- konfiguriert sind, um Licht in einem anderen Wellenlängenbereich als die ersten LEDs zu emittieren,
- ebenso in die erste Richtung weisen und/oder;
mindestens eines von Schmalspektrum-LEDs, LEDs mit wählbarer Farbe und/oder LEDs, die konfiguriert sind, um grünes Licht zu emittieren und/oder Licht mit einer Wellenlänge in dem Bereich von 500 bis 580 Nanometern emittieren, vorzugsweise etwa 550 Nanometer.

14. Beleuchtungssystem, umfassend
ein oder mehrere Paare von im Wesentlichen parallelen Rahmenabschnitten (8); und
zwischen jedem Paar von Rahmenabschnitten (8), eine oder mehrere LED-Armaturen (1) nach einem der vorstehenden Ansprüche;
wobei für jedes Paar von Rahmenabschnitten (8) die eine oder die mehreren LED-Armaturen im Wesentlichen parallel zueinander und/oder im Wesentlichen senkrecht zu jedem Rahmenabschnitt (8) von dem Paar von Rahmenabschnitten (8) angeordnet sind.

15. Beleuchtungssystem nach Anspruch 14, umfassend zwei oder mehr Paare von im Wesentlichen parallelen Rahmenabschnitte (8);
wobei ein erstes Paar von Rahmenabschnitten (8) an einem zweiten Paar von Rahmenabschnitten (8) gelenkig angebracht ist, wobei ermöglicht wird, dass das erste Paar von Rahmenabschnitten (8) und das zweite Paar von Rahmenabschnitten (8) entlang einer Achse im Wesentlichen senkrecht zu jedem der Rahmenabschnitte (8) des ersten und des zweiten Paars von Rahmenabschnitten (8) und/oder im Wesentlichen parallel zu jeder der LED-Armaturen zwischen dem ersten und/oder dem zweiten Paar von Rahmenabschnitten (8) relativ zueinander geschwenkt werden; wobei vorzugsweise:
das erste Paar von Rahmenabschnitten (8) einen ersten und einen zweiten Rahmenabschnitt (8) umfasst; und
das zweite Paar von Rahmenabschnitten (8) einen dritten und einen vierten Rahmenabschnitt (8) umfasst;
wobei ein erstes Ende des ersten Rahmenabschnitts (8) und ein erstes Ende des dritten Rahmenabschnitts (8) gelenkig verbunden sind;
wobei ein erstes Ende des zweiten Rahmenabschnitts (8), das ein Ende des zweiten Rahmenabschnitts (8) auf derselben Seite des ersten Paars von Rahmenabschnitten ist wie das erste Ende des ersten Rahmenabschnitts (8), und ein erstes Ende des vierten Rahmenabschnitts (8), das ein Ende des vierten Rahmenabschnitts (8) auf derselben Seite des zweiten Paars von Rahmenabschnitten (8) ist wie das erste Ende des dritten Rahmenabschnitts (8), ebenso gelenkig verbunden sind.

## Revendications

1. Armature de diode électroluminescente, DEL, (1) comprenant :
une pluralité de premières DEL orientées dans une première direction et disposées en ligne dans une deuxième direction, sensiblement perpendiculaire à la première direction ;
pour chaque première DEL (2, 2') parmi la pluralité de premières DEL, un réflecteur (11) orienté sensiblement dans la première direction, disposé à côté de cette première DEL (2, 2') dans une troisième direction, sensiblement perpendiculaire aux première et deuxième directions, et un autre réflecteur (11') orienté sensiblement dans la première direction et disposé à côté de ladite première DEL (2, 2') dans une direction opposée à la troisième direction ;
une lentille (4) allongée dans la deuxième direction, dont un côté récepteur (10, 10') est configuré pour recevoir de la lumière de la pluralité de premières DEL, et dont un côté émetteur est configuré pour émettre, sous forme de faisceau, la lumière qui a été reçue sur le côté de réception (10, 10'), et qui a traversé la lentille (4) ;
dans laquelle le côté récepteur (10, 10') de la lentille (4) est conçu pour réfléchir une partie de la lumière émise par une première DEL (2, 2') parmi la pluralité de premières DEL sur le réflecteur (11) adjacent à cette DEL, permettant à cette partie de la lumière d'être réfléchie par ce réflecteur (11) vers le côté récepteur (10, 10') ;
dans laquelle le côté récepteur (10, 10'), dans le plan de section transversale perpendiculaire à la deuxième direction, est décrit par une pluralité de courbes ;
dans laquelle une première courbe parmi la pluralité de courbes est formée de telle sorte que la lumière, émise par ladite première DEL (2, 2') qui tombe sur la partie du côté récepteur décrit par la première courbe (10), est partiellement réfléchie vers le réflecteur (11) adjacent à cette première DEL (2, 2') ;
dans laquelle une seconde courbe parmi la pluralité de courbes, adjacente à la première courbe, est formée de telle sorte que la lumière émise, par ladite première DEL (2, 2') qui tombe sur la partie du côté récepteur décrit par la seconde courbe (10'), est partiellement réfléchie vers l'autre réflecteur (11') adjacent à cette première DEL (2, 2') ;
**caractérisée en ce que** les première et seconde courbes sont des arcs de cercle dont les centres sont situés respectivement au niveau du réflecteur (11) et de l'autre réflecteur (11') respectivement ;
dans laquelle chacun des deux arcs de cercle a un angle compris entre 90 et 180 degrés, de préférence entre 95 et 135 degrés.

2. Armature de DEL (1) selon la revendication 1, dans laquelle au moins 50 % de la lumière réfléchie par le côté récepteur (10, 10') est renvoyée par le réflecteur (11) vers le côté récepteur (10, 10').

3. Armature de DEL (1) selon l'une quelconque des revendications précédentes, dans laquelle la section transversale de la lentille (4) est sensiblement constante dans la deuxième direction.

4. Armature de DEL (1) selon l'une quelconque des revendications précédentes, dans laquelle la ligne de premières DEL est une bande de DEL ; et/ou dans laquelle les premières DEL sont des DEL à large spectre, de préférence des DEL à lumière blanche.

5. Armature de DEL (1) selon l'une quelconque des revendications précédentes, dans laquelle la ligne de premières DEL est disposée sur une plaque (5).

6. Armature de DEL (1) selon l'une quelconque des revendications précédentes, comprenant en outre un cadre d'armature ayant une section transversale approximativement constante dans la deuxième direction, l'armature de DEL (1) comprenant de préférence en outre un ou plusieurs éléments de refroidissement conçus pour conduire la chaleur générée par les premières DEL à l'écart des DEL respectives, et/ou dans laquelle les éléments de refroidissement sont disposés sur un côté du cadre d'armature opposé au côté sur lequel les DEL sont disposées.

7. Armature de DEL (1) selon les revendications 5 et 6, dans laquelle le cadre d'armature comprend une paire de rainures de guidage disposées de manière opposée dans laquelle des bords de la plaque sont disposés.

8. Armature de DEL (1) selon l'une quelconque des revendications précédentes, comprenant en outre :
une pluralité de secondes DEL disposées en ligne ; et,
dans laquelle la lentille (4) comprend une partie de mise en forme de faisceau, dans laquelle la partie de mise en forme de faisceau comprend le côté récepteur (10, 10') configuré pour recevoir la lumière de la pluralité de premières DEL, et le côté émetteur configuré pour émettre, sous forme de faisceau, la lumière qui a été reçue sur le côté récepteur (10, 10'), et qui a traversé la partie de mise en forme de faisceau ;
dans laquelle la lentille (4) comprenant en outre une partie diffusante, dans laquelle la partie diffusante est configurée pour recevoir de la lumière de la ligne de secondes DEL (3, 3'), pour guider intérieurement ladite lumière tout en permettant à ladite lumière de diverger dans la deuxième direction et/ou dans une direction opposée à la deuxième direction, dans la partie de mise en forme de faisceau de telle sorte que ladite lumière soit émise par le côté émetteur de celle-ci ; dans laquelle la partie diffusante est de préférence configurée en outre pour :
- empêcher et/ou limiter la divergence de la lumière reçue de la ligne de secondes DEL (3, 3') dans des directions perpendiculaires à la deuxième direction ; et/ou
- guider intérieurement la lumière reçue de la ligne de secondes DEL (3, 3') sur une distance liée, de préférence approximativement proportionnelle, à une distance entre de secondes DEL adjacentes (3, 3').

9. Armature de DEL (1) selon la revendication 8, dans laquelle la partie de mise en forme de faisceau et la partie diffusante sont formées d'un seul corps monolithique et/ou sont formées à partir d'un seul profil d'extrusion.

10. Armature de DEL (1) selon l'une quelconque des revendications 8 ou 9, dans laquelle la ligne de premières DEL (2, 2') comprend un premier nombre de premières DEL (2, 2') par unité de distance, et/ou dans laquelle la ligne de secondes DEL (3, 3') possède un second nombre de DEL (3, 3') par unité de distance, de préférence plus petit que le premier nombre.

11. Armature de DEL (1) selon l'une quelconque des revendications 8, 9 ou 10, dans laquelle la ligne de secondes DEL (3, 3') est une bande de DEL et/ou est disposée parallèlement à la ligne de premières DEL (2, 2').

12. Armature de DEL (1) selon l'une quelconque des revendications 8 à 11, dans laquelle la ligne de premières DEL et la ligne de secondes DEL (3, 3') sont disposées sur une plaque.

13. Armature de DEL (1) selon l'une quelconque des revendications 8 à 12, dans laquelle les secondes DEL (3, 3') :
- sont configurées pour émettre de la lumière dans une gamme de longueurs d'onde différente de celle des premières DEL,
- sont également orientées vers la première direction, et/ou ;
au moins l'une parmi des DEL à spectre étroit, des DEL dont la couleur peut être sélectionnée, et/ou des DEL configurées pour émettre une lumière verte et/ou pour émettre une lumière d'une longueur d'onde dans la plage de 500 à 580 nanomètres, et de préférence autour de 550 nanomètres.

14. Système d'éclairage comprenant
une ou plusieurs paires de sections de cadre sensiblement parallèles (8) ; et
entre chaque paire de sections de cadre (8), une ou plusieurs armatures de DEL (1) selon l'une quelconque des revendications précédentes ;
dans lequel, pour chaque paire de sections de cadre (8), la ou les armatures de DEL sont disposées sensiblement parallèlement l'une à l'autre et/ou sensiblement perpendiculairement à chaque section de cadre (8) à partir de ladite paire de sections de cadre (8).

15. Système d'éclairage selon la revendication 14, comprenant deux paires de sections de cadre ou plus sensiblement parallèles (8) ;
dans lequel une première paire de sections de cadre (8) est fixée de manière articulée à une seconde paire de sections de cadre (8), ce qui permet à la première paire de sections de cadre (8) et aux secondes paires de sections de cadre (8) de pivoter l'une par rapport à l'autre le long d'un axe sensiblement perpendiculaire à chacune des sections de cadre (8) des première et seconde paires de sections de cadre (8) et/ou sensiblement parallèle à chacune des armatures de DEL entre les première et/ou seconde paires de sections de cadre (8) ; dans lequel, de préférence :
la première paire de sections de cadre (8) comprend une première et une seconde section de cadre (8) ; et
la seconde paire de sections de cadre (8) comprend une troisième et une quatrième section de cadre (8) ;
dans lequel une première extrémité de la première section de cadre (8) et une première extrémité de la troisième section de cadre (8) sont reliées de manière articulée ;
dans lequel une première extrémité de la deuxième section de cadre (8), qui est une extrémité de la deuxième section de cadre (8) du même côté de la première paire de sections de cadre que la première extrémité de la première section de cadre (8), et une première extrémité de la quatrième section de cadre (8), qui est une extrémité de la quatrième section de cadre (8) du même côté de la seconde paire de sections de cadre (8) que la première extrémité des troisièmes sections de cadre (8), sont également reliées de manière articulée.
